# EUROPEAN PATENT APPLICATION

(11) **EP 1 707 343 A1**
(43) Date of publication of application: **04.10.2006**
(21) Application number: 06111786.7
(22) Date of filing: 27.03.2006
(51) Int. Cl.: B29C 70/38, B29C 35/08, B29K 63/00, B29L 9/00

(54) **Molding method of visible light curable fiber reinforced resin composite**

(30) Priority: 31.03.2005 JP 2005103243
(71) Applicant: FUJI JUKOGYO KABUSHIKI KAISHA, Tokyo 160-8316 (JP)
(72) Inventor: Nakamura, Hiroyuki c/o Fuji Jukogyo Kabus. Kaisha, Tokyo, 160-8316 (JP); Mori, Nobuyuki c/o Fuji Jukogyo Kabus. Kaisha, Tokyo, 160-8316 (JP)
(74) Representative: Manley, Nicholas Michael

(57) **Abstract**

A visible light curable prepreg impregnated with a visible light curable resin which is prepared so as to contain cationically polymerizable compound and to have no tackiness at or below predetermined temperature, is filled into a cartridge structured by light-shielding box (dark box) in a dark room (P1). After the cartridge is disposed in an automatic laminating equipment (P2), the automatic laminating equipment takes the prepreg out of the cartridge and feeds the prepreg (S1), puts the prepreg into contact with a heated compaction rollers to provide tackiness (S2), laminates the prepreg by pressing the prepreg against a molding jig by the compaction rollers (S3), and cures by applying visible light to the laminated prepreg by a visible light emitting lamp (S4). Lamination is performed in multilayer by repeating the steps of S1 to S4.

## Description

### BACKGROUND OF THE INVENTION

### Field of the Invention

The present invention relates to a method of molding a fiber reinforced resin composite impregnated with a visible light curable resin.

### Description of the Related Art

Heretofore, a light (visible light) curable prepreg on the market was limited to a prepreg for use in general application (glass reinforced fiber or organic reinforced fiber) for hand lay-up, and there was no prepreg developed for automatic laminating.

In Patent Documents 1 and 2, a light (visible light) curable composite is described in which a carbon fiber is used as a reinforced fiber and describes a resin and its reaction mechanism, but the documents do not relate to an automatic laminate molding method.

In a method of molding the light (visible light) curable composite by use of the carbon fiber as the reinforced fiber, in an embodiment of Patent Document 3, the laminate after lay-up is irradiated with a light (ultraviolet light in the embodiment), and cured. A material used in case of the hand lay-up is a prepreg. The material used in case of a filament winding molding is a wound thread impregnated with a resin. In either material, the resin is wet type, having tackiness (adhesive propoerty).
[Patent Document 1] JP Tokukaihei 8-57971
[Patent Document 2] JP Tokukai 2001-2760
[Patent Document 3] JP Tokukaihei 11-193322
[Patent Document 4] JP Tokukaihei 11-263804
[Non-Patent Document 1] 29th Composite Material Symposium (2004) Lecture Gist Pages 91 and 92 "Research of Visible Light Curable Matrix Resin" by Hiroki Oseto, Tsuyoshi Tanaka, Nobuyuki Tomioka, Nobuyuki Arai (Toray Industries, Inc.), and Hiroyuki Nakamura (Fuji Heavy Industries Ltd.)

Heretofore, in industrial fields, there has been broadly used a prepreg constituted by impregnating a reinforced fiber such as a glass fiber, a carbon fiber, or an aramid fiber with a thermosetting or thermoplastic matrix resin. For example, in a case where an outer skin of an airplane is molded with the thermosetting prepreg in which the thermosetting matrix resin is adopted, an uncured prepreg as an intermediate substrate for molding is cut into a predetermined size, laminated on a molding jig having a outer skin surface shape, and pressurized and heated in an autoclave to cure and mold the skin. Therefore, there are problems of high cost, thermal distortion, and the like.

Moreover, in recent years, in consideration of these problems, there have been developed an automatic laminating method, and a molding method which does not require heating. The automatic laminating method is developed with respect to thermosetting and thermoplastic prepregs, and the molding method which does not require heating is developed with respect to a photo-curing prepreg. However, in the present situations, the methods are limited to hand lay-up, and a method of molding a light (visible light) curable composite by the automatic laminating has not been developed.

Furthermore, in a case where the prepreg impregnated with the wet type of resin having tackiness constantly is used for the automatic laminating of the photo-curing prepreg, there is a problem that the prepreg adheres to a guide while passing through the guide or the like in an automatic laminating equipment. A mold-releasing paper or film is required for at least one face of the prepreg.

### SUMMARY OF THE INVENTION

The present invention has been developed in view of the above-described problems of the conventional technology, and an object is to provide an automatic laminating method of molding a visible light curable fiber reinforced resin composite with good productivity, in which a tackiness of a visible light curable prepreg is controlled immediately before lamination, and the laminated prepreg is irradiated with a visible light, and cured.

The present invention for achieving the above object is directed to a molding method of a visible light curable fiber reinforced resin composite, comprising a heating step to heat a visible light curable prepreg impregnated with a visible light curable resin which is prepared so as to contain a cationically polymerizable compound and to have no tackiness at a predetermined temperature or lower, so that the visible light curable prepreg is softened to have the tackiness; a laminating step to laminate the visible light curable prepreg by pressing the visible light curable prepreg against a molding jig by compaction rollers; and a curing step to cure the visible light curable prepreg by applying a visible light to the visible light curable prepreg, wherein the curing step is taken every time one layer of the visible light curable prepreg is laminated.

According to the present invention, the prepreg which has been impregnated with the visible light curable resin prepared so as to contain a cationically polymerizable compound and to have no tackiness at or below the predetermined temperature, is heated so that the prepreg is softened to have the tackiness. The prepreg is then pressed against the molding jig by the compaction rollers for lamination. Therefore, the prepreg can be provided with tackiness immediately before being laminated. Therefore, mold-releasing paper or film is not required. There is also an effect that the material does not adhere to a guide of an automatic laminating equipment while passing through the guide or the like.

Moreover, according to the present invention, the visible light is applied to the prepreg every time one layer of the prepreg is laminated, and the prepreg is cured. Consequently, there are effects that the prepreg is easily cured even in case where a reinforced fiber such as a carbon fiber that does not transmit visible light is used, and that there is little restriction concerning thickness.

The tackiness is provided to the prepreg by heating the prepreg immediately before laminating the prepreg. Consequently, there is an effect that an environment of a lay-up room does not have to be controlled in a certain range of temperature and humidity.

By way of example only, a specific embodiment of the present invention will now be described with reference to the accompanying drawings, in which:
FIG. 1 is a flowchart showing a method of molding a visible light curable fiber reinforced resin composite in an embodiment of the present invention; and
FIG. 2 is a front view of an automatic laminating equipment applied to the molding method in the embodiment of the present invention.

### DESCRIPTION OF THE PREFERRED EMBODIMENT

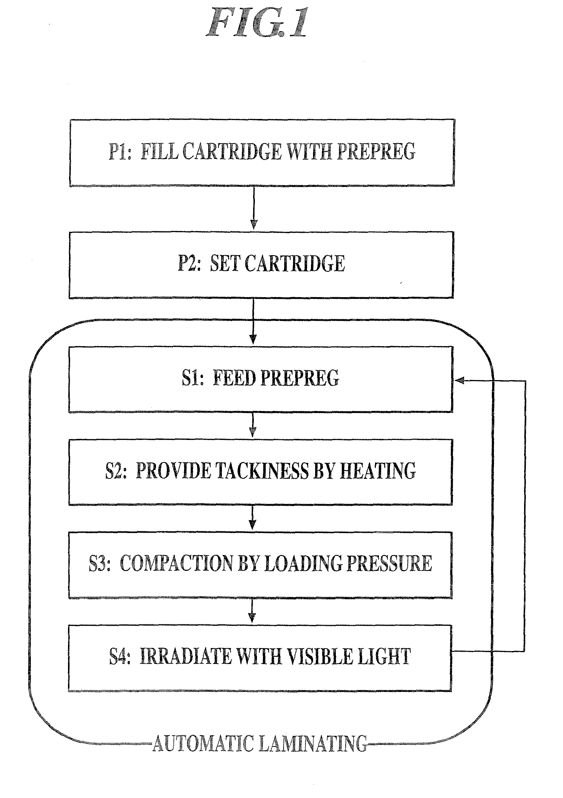

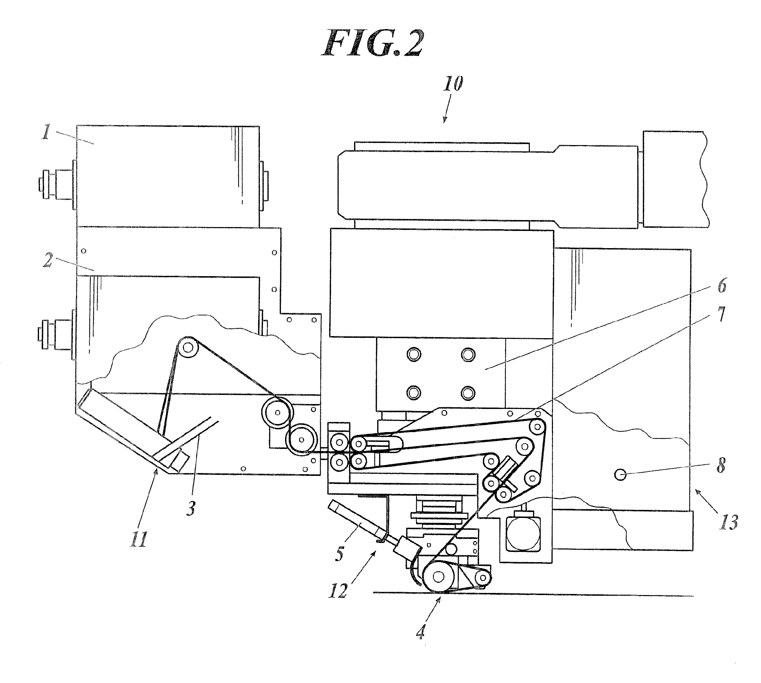

FIG. 1 is a flowchart showing a method of molding a visible light curable fiber reinforced resin composite in the present embodiment. FIG. 2 is a front view of an automatic laminating equipment which is applied to the molding method of the present embodiment. An automatic laminating equipment 10 is structured with: a prepreg feeding section 11; a laminate molding section 12; and an irradiating section 13. A cartridge 1 containing a prepreg is disposed in the prepreg feeding section 11. The prepreg feeding section 11 is covered with a light-shielding box 2, and a prepreg 3 is taken out from the cartridge 1 and supplied to the laminate molding section 12. The laminate molding section 12 has a structure, which vertically moves up and down by an air cylinder 6, a unit provided with compaction rollers being pressed against a molding jig. The irradiating section 13 is provided with a visible light emitting lamp 8.

First, in a dark room, a light-shielding box (dark box) is filled with a prepreg impregnated with a resin, which is formulated with 60 wt% to 90 wt% of a solid epoxy resin and 40 wt% to 10 wt% of a liquid epoxy resin with respect to the total epoxy resins contained therein, and is prepared so as to have no tackiness at a usual laminating operation environment temperature of 30°C or below (step P1).

Next, the cartridge 1 filled with the visible light curable prepreg prepared in the step P1 is mounted on the prepreg feeding section 11 of the automatic laminating equipment 10 (step P2).

Subsequently, automatic laminate forming steps of S1 to S4 are performed by the automatic laminating equipment 10.

First, the prepreg feeding section 11 of the automatic laminating equipment 10 feeds the prepreg 3 from the cartridge 1 to take out the prepreg 3 (step S1).

Next, the prepreg 3 taken out from the cartridge 1 in the step S1 is heated by compaction rollers 4 to provide tackiness to the prepreg 3 (step S2). At this time, the compaction rollers 4 are heated to a temperature from 40°C to 150°C, more preferably from 60°C to 80°C. That is, the heating of the prepreg in the present step is carried out by bringing the prepreg 3 into contact with the compaction rollers 4 when the prepreg 3 is sandwiched between the surface of the molding jig and the compaction rollers 4.

The prepreg 3 is pressed against the molding jig by the compaction rollers 4 to laminate the prepreg (step S3).

Next, the irradiating section 13 of the automatic laminating equipment 10 irradiates the prepreg laminated in the step 3 with visible light by the visible light emitting lamp 8 to cure the prepreg (step S4). The prepreg 3 brought into contact with the molding jig surface and the compaction rollers 4 in the step S2 may also be irradiated with this visible light immediately before the prepreg is pressed. In this case, the light (visible light) is preferably set to a wavelength from 400 nm to 500 nm, an illuminance from 0.1 W/cm² to 10 W/cm², and a light exposure from 0.1 J/cm² to 30 J/cm².

A first layer of the prepreg is laminated and molded by the above-described steps.

Next, the steps of S1 to S4 are performed for each layer to obtain second and subsequent layers of the prepregs 3.

The automatic laminating equipment completes its automatic laminate forming steps, when the number of layers reaches the required number.
(1) The visible light curable prepreg which is used is a prepreg impregnated with a dry type resin, which has no tackiness at a laminating operation environment temperature or below. Therefore, mold-releasing paper or film is not required. Further, it is in the automatic laminating, concerning the below points.
   - Mold-releasing paper or film does not have to be removed immediately before the visible light curable prepreg enters the automatic laminating equipment.
   - Visible light curable prepreg does not adhere to a guide when passing through the guide or the like of the automatic laminating equipment.
(2) The visible light is applied to the prepreg to cure the prepreg every time one layer of the prepreg is laminated by the automatic laminating. Therefore, even in case where a reinforced fiber such as a carbon fiber that does not transmit any visible light is used, the prepreg can be easily cured, and there is little restriction concerning thickness.
(3) To provide the tackiness to the material, the material is heated immediately before being automatically laminated with the compaction rollers, so that the tackiness is momentarily provided. Therefore, the environment of a lay-up room does not have to be kept in a certain range of temperature and humidity.
(4) The visible light curable prepreg is shielded from the light until immediately before the prepreg is automatically laminated. Therefore, the prepreg is not unnecessarily photo-cured, even in case where the lay-up room is not a dark room.

As the resin with which the visible light curable prepreg is impregnated, the resin described in Non-Patent Document 1 is used. Description is given hereinafter in detail.

Any visible light curable resin can be used, so long as it has no tackiness at 30°C or below and has tackiness from 40 to 150°C. in the present embodiment, a resin composition of the visible light curable prepreg includes the following constituting elements (A), (B), and (C), where a blending amount of the constituting element (B) is 0.01 to 20 wt% with respect to the constituting element (A), and a molar ratio between the constituting elements (B) and (C) is in a range of 5/1 to 0.2/1.
(A) cationically polymerizable compound
(B) iodonium salt represented by a general formula (I) 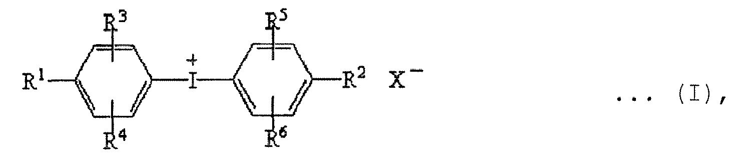 wherein each of R¹ and R² denotes any of a hydrogen atom, an alkyl group, and an alkoxy group, and R¹ and R² may be the same or different from each other. Each of R³, R⁴, R⁵, and R⁶ denotes either a hydrogen atom or an alkyl group, and R³, R⁴, R⁵, and R⁶ may be the same or different from each other. X denotes SbF₆ or B(C₆F₅)₄.
(C) sensitizer represented by general formula (II) or (III) 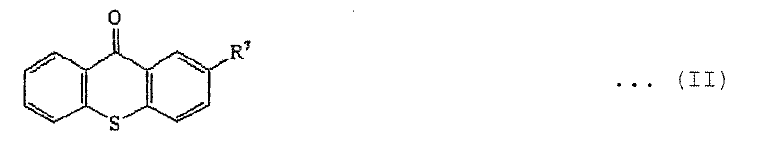
wherein R⁷ denotes a halogen atom, and 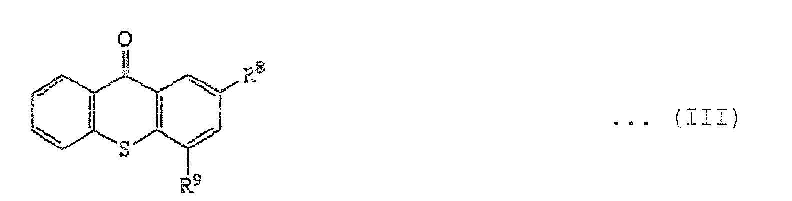 wherein each of R⁸ and R⁹ denotes a hydrogen atom or an alkyl group, and R⁸ and R⁹ may be the same or different from each other.

According to the present resin composition for the visible light curable prepreg, there can be provided a resin composition for visible light curable prepreg which is curable to the inside or to the back side of a fiber reinforced composite in short time by irradiation with the visible light with low energy.

Furthermore, blending amount of various cationically polymerizable compounds is changed to control the viscosity of the resin and to improve handleability of the prepreg.

There is no restriction concerning the cationically polymerizable compound (A) as long as the compound is a monomer, an oligomer, or a polymer having a generally known cationically polymerizable group. Examples of the compound include vinyl resin, epoxy resin, bicyclorthoester resin, spirorthocarbonate resin, oxetane resin, and the like.

Above all, the epoxy resin or the oxetane resin is preferably used since it has more heat resistance and visible light curability.

Examples of the epoxy resin include: monofunctional monomers such as phenylglycidyl ether, p-tert-butylphenylglycidyl ether, butylglycidyl ether, 2-ethylhexylglycidyl ether, allylglycidyl ether, 1,2-butylene oxide, 1,3-butadiene monoxide, 1,2-dodecylene oxide, epichlorohydrin, 1,2-epoxy decane, ethylene oxide, propylene oxide, styrene oxide, cyclohexene oxide, limonene oxide, α-pinene oxide, 3-methacryloyloxymethylcyclohexene oxide, 3-acryloyloxymethylcyclohexene oxide, and 3-vinylcyclohexene oxide; and multifunctional epoxy resins such as 1,1,3-tetradecadiene dioxide, limonene dioxide, 4-vinylcyclohexene dioxide, 3,4-epoxycyclohexylmethyl-3,4-epoxycyclohexane carboxylate, 3,4-epoxycyclohexylpentyl-3,4-epoxycyclohexane carboxylate, di(3,4-epoxycyclohexyl)adipate, neopentylglycoldiglycidyl ether, glycerolpolyglycidyl ether, bisphenol A-type epoxy resin, hydrogenated bisphenol A-type epoxy resin, bisphenol F-type epoxy resin, o-, m-, p-cresol novolak type epoxy resin, phenol novolak type epoxy resin, naphthalene ring containing epoxy resin, biphenyl type epoxy resin, dicyclopentadiene type epoxy resin, triphenylmethane type epoxy resin, polyglycidyl ether of polyvalent alcohol, epoxy silicone K-62-722 manufactured by Shin-Etsu Silicone Co., Ltd., and epoxy silicone UV9300 manufactured by Toshiba Silicone Co., Ltd.

Examples of the oxetane resin include 3,3-dimethyl oxetane, 3,3-bis(chloromethyl) oxetane, 2-hydroxymethyl oxetane, 3-methyl-3-oxetane methanol, 3-methyl-3-methoxymethyl oxetane, 3-ethyl-3-hydroxymethyl oxetane, 1,4-bis{[3-ethyl-3-oxetanyl] methoxy} methyl} benzene, 3-ethyl-3-phenoxymethyl oxetane, resorcinol bis(3-methyl-3-oxetanylethyl) ether, m-xylylenebis(3-ethyl-3-oxetanylethyl ether), di[1-ethyl(3-oxetanyl)] methyl ether, 3-ethyl-3-(2-ethylhexyloxymethyl) oxetane, 3-ethyl-3{[3-(triethoxysilyl)propoxy]methyl} oxetane, oxetanyl silsesquioxane, and phenylnovolak oxetane. These epoxy resins and oxetane resins may be used alone or in a combination of two or more.

To control the viscosity of the resin or to improve the handleability of the prepreg, there is preferably used an epoxy resin which is a blend of a solid epoxy resin and a liquid epoxy resin. A ratio of the solid epoxy resin is preferably from 60 wt% to 90 wt% with respect to 100 wt% of the total epoxy resin contained. When the ratio of the solid epoxy resin is less than 60 wt%, the blended amount of the liquid epoxy resin becomes large, and there is a fear that the resin has a viscosity at normal temperature (up to 30°C). When the ratio of the solid epoxy resin exceeds 90 wt%, the blended amount of the liquid epoxy resin becomes small, and there is a fear of reduction in impregnating property of the resin into the reinforced fiber.

The iodonium salt (B) used is an iodonium salt represented by the above general formula (I).

Typical examples of the iodonium salt represented by the general formula (I) include the following compounds. These compounds may be used alone or in a combination of a plurality.

Above all, the compound represented by the general formula (IV) is preferably used since it has a higher visible light curability. 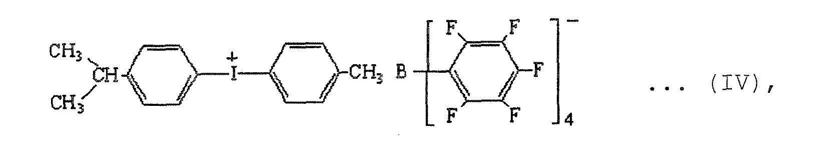 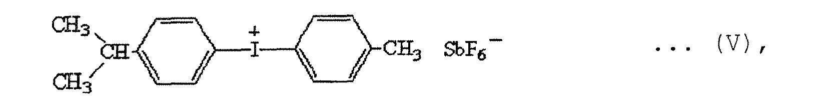 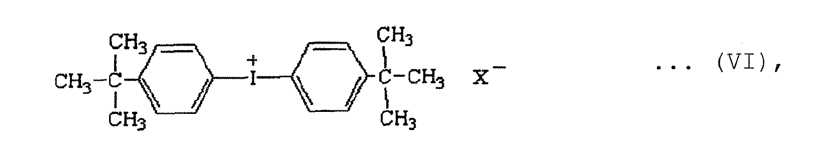 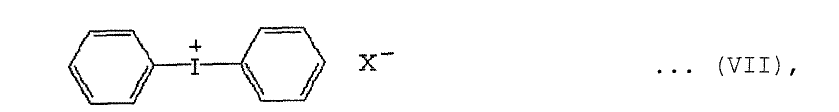 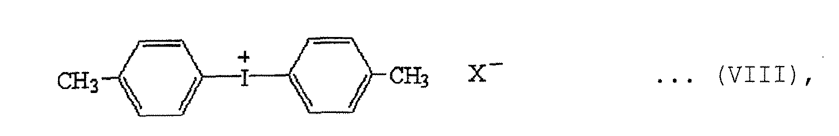 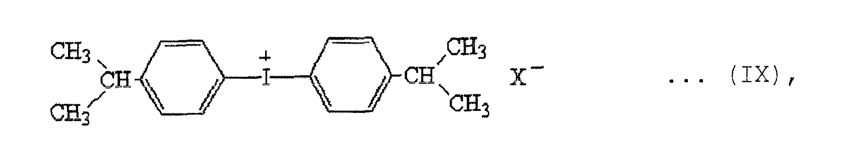 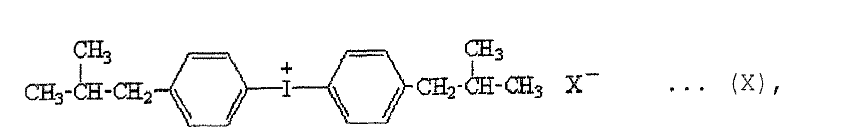 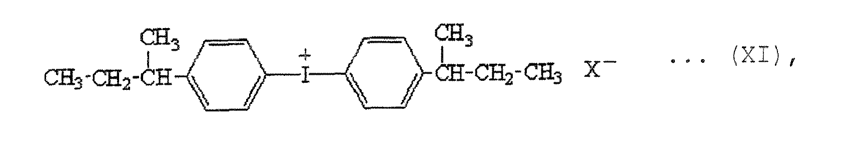 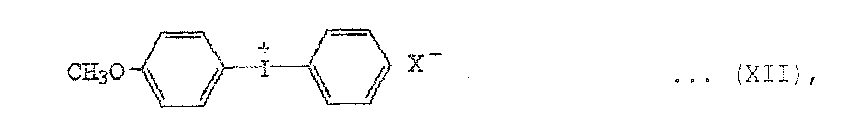 wherein X denotes either of SbF₆ or B(C₆F₅)₄.

The sensitizer (C) used is the sensitizer represented by the above general formula (II) or (III).

Typical examples of the iodonium salt represented by the general formula (II) or (III) include compounds such as thioxanthone, 2-isopropylthioxanthone, 2-chlorothioxanthone, 2,4-dimethylthioxanthone, 2,4-diethylthioxanthone, and 2,4-diisopropylthioxanthone. These compounds may be used alone or in a combination of a plurality.

The blended amount of the iodonium salt (B) is preferably from 0.01 to 20 wt%, more preferably from 0.1 to 10 wt% with respect to the cationically polymerizable compound (A). In case where the blended amount of the iodonium salt (B) is less than 0.01 wt%, the visible light curability of the resin composition for the visible light curable prepreg is suppressed. In case where the blended amount exceeds 20 wt%, a mechanical property of a cured resin composition for the visible light curable prepreg deteriorates.

Moreover, the molar ratio between the iodonium salt (B) and the sensitizer (C) needs to be in a range from 5/1 to 0.2/1, more preferably from 2/1 to 0.5/1. In case where the molar ratio between the iodonium salt (B) and the sensitizer (C) is larger than 5/1, the visible light curability of the resin composition for the visible light curable prepreg is suppressed. In case where the molar ratio is smaller than 0.2/1, the mechanical property of the cured resin composition for the visible light curable prepreg deteriorates. Furthermore, when the molar ratio is set in this range, it is possible to sufficiently improve a photo reactivity of the iodonium salt (B) without polycyclic aromatic compound that is a constituting factor of Patent Document 4.

When the resin composition for the visible light curable prepreg is irradiated with a visible light having a wavelength of 404 nm, an illuminance of 5.0 mW/cm², and a light exposure of 200 mJ/cm², "reactivity obtained by differential scanning calorimetry" is preferably 50% or more, more preferably 70% or more.

In a case where the prepreg impregnated with the carbon fiber is cured and the reactivity is less than 50%, much visible light irradiation energy is required during the molding of the fiber reinforced composite, and the resultant fiber reinforced composite has insufficient heat resistance or mechanical property.

Next, a supplemental description on the prepreg will be given.

The reinforced fiber is impregnated with the resin composition for the visible light curable prepreg to constitute the prepreg. The prepreg is manufactured by a method such as a wet method, which dissolves the resin composition for visible light curable prepreg in a solvent such as methyl ethyl ketone or methanol so as to lower the viscosity during the impregnating, or a hot melt method (dry method) which heats a matrix resin so as to lower the viscosity, and impregnate.

First, the wet method is a method in which the reinforced fiber is immersed into the solution of the resin composition for the visible light curable prepreg and drawn up from the solution, and then the solvent is evaporated using an oven or the like to obtain the prepreg. On the other hand, the hot melt method is a method in which the reinforced fiber is directly impregnated with the visible light curable prepreg resin composition heated so as to lower the viscosity, or a method in which a film is first prepared by coating mold-releasing paper or the like with the resin composition for the visible light curable prepreg, and the film is superimposed on both sides or one side of the reinforced fiber to impregnate the fiber with the resin by heat and pressure. Among the methods, the hot melt method is a preferable method since there is no remaining solvent in the prepreg.

As the reinforced fiber used in such prepreg, a glass fiber, carbon fiber, graphite fiber, aramid fiber, boron fiber, alumina fiber, silicon carbide fiber, a combination thereof, and the like are used. Above all, it is preferable to use the carbon fiber having a superior specific strength and specific elasticity in applications (e.g., aircraft, spacecraft members, etc.) that require reduction in weight and improvement in strength.

There is no restriction on configuration of the reinforced fiber. For example, a long fiber drawn and aligned in one direction, tow, fabric, mat, knit, braid, or the like are used. Especially in applications in which high specific strength and high specific elasticity are required, an arrangement obtained by aligning the reinforced fibers in one direction is most suitable, however, a fabric-like arrangement, which is easy to handle, is also suitable.

The strength and the elasticity of the resultant visible light curable fiber reinforced composite largely dependent on the amount of the reinforced fiber. That is, in a case where a constant amount of the reinforced fiber is contained, the more the amount of the matrix resin combined is reduced, the more a product weight can be reduced, while maintaining a substantially constant performance of the fiber reinforced composite or the final product. For these purposes or the like, a content of the reinforced fiber is preferably from 40 to 90 wt%, more preferably from 50 to 80 wt%, further preferably from 50 to 70 wt% with respect to a total weight of the prepreg and the visible light curable fiber reinforced composite. In a case where the content of the reinforced fiber is less than 40 wt%, reduction in weight is not sufficient in some cases. In a case where the content exceeds 90 wt%, a void would remain in the composite due to a reduced resin amount, and the mechanical property deteriorates in some cases.

The reinforced fiber used in the prepreg has a weight of preferably from 10 to 400 g/m², more preferably from 50 to 200 g/m². In a case where the reinforced fiber areal weight is less than 10 g/m², the prepreg is easily cracked, and the handleability remarkably deteriorates. In a case where the reinforced fiber areal weight exceed 400 g/m², the resin does not reach the center portion of the prepreg in a thickness direction during impregnating with the matrix resin, resulting in the prepreg having a non-impregnated portion, a void remains during the curing, and a physical property of a molded article may be deteriorated. Since the thickness of the prepreg is determined in consideration of the mechanical property required for the application, ease of lamination operation, and the like, there is no restriction on the thickness. However, the thickness is preferably from several µm to 300 µm. In a case where the thickness of the prepreg is less than several µm, the prepreg is easily cracked, and the handleability remarkably deteriorates. In a case where the thickness exceeds 300 µm, the resin does not reach the center portion of the prepreg in the thickness direction during the impregnating, thereby resulting in the prepreg having a non-impregnated portion.

Next, supplemental description on the compaction rollers of the automatic laminating equipment shown in FIG. 2 is given. As for the compaction rollers used in providing the tackiness to the visible light curable prepreg, any material may be used as long as it can be heated. Examples of the material include steel, stainless steel, aluminum, urethane-based resin, silicon-based resin, fluorine-based resin, and the like. Especially, the stainless steel or the urethane-based resin is used. When the temperature of the compaction roller needs to be controlled to 100°C or higher, the stainless steel is used. By controlling the temperature of the compaction roller from 40°C to 150°C to provide the tackiness to the visible light curable prepreg, which has no tackiness at normal temperature, the visible light curable prepreg adheres to a lamination face. In a case where the temperature of the compaction roller is 40°C or lower, since a sufficient tackiness is not developed in the visible light curable prepreg, the prepreg does not adhere to the lamination face. In a case where the temperature of the compaction roller is higher than 150°C, the viscosity of the visible light curable prepreg is reduced excessively, and the thickness of a laminate cannot be maintained.

Next, a supplemental description on a light source will be given.

As for the light source used in curing the visible light curable prepreg resin composition, any light source can be used as long as the visible light is emitted. Examples of the light source include sunlight, incandescent lamp, halogen lamp, low-pressure mercury lamp, intermediate-pressure mercury lamp, high-pressure mercury lamp, superhigh-pressure mercury lamp, fluorescent lamp, metal halide lamp, xenon lamp, carbon arc lamp, microwave emitting non-electrode lamp, and the like. There may also be used a laser such as semiconductor laser, argon laser, helium-cadmium laser, and the like. Especially, the metal halide lamp, the microwave emitting non-electrode lamp, or the high-pressure mercury lamp is preferably used.

There is no restriction on spectrum of the visible light used to cure the visible light curable resin composition, however, it is preferable to include the light having a wavelength of 380 nm to 500 nm, and it is more preferable to include the light having a wavelength of 380 nm to 450 nm. In a case where the light having a wavelength of 500 nm or less is not included, since the sensitivity may become insufficient, it may easily result in a curing defect.

## Claims

1. A molding method of a visible light curable fiber reinforced resin composite, comprising:
a heating step to heat a visible light curable prepreg impregnated with a visible light curable resin which is prepared so as to contain a cationically polymerizable compound and to have no tackiness at a predetermined temperature or lower, so that the visible light curable prepreg is softened to have tackiness;
a laminating step to laminate the visible light curable prepreg by pressing the visible light curable prepreg against a molding jig by compaction rollers; and
a curing step to cure the visible light curable prepreg by applying a visible light to the visible light curable prepreg,
wherein the curing step is taken every time one layer of the visible light curable prepreg is laminated.

2. The molding method of the visible light curable fiber reinforced resin composite according to claim 1, wherein the predetermined temperature is 30°C or lower.

3. The molding method of the visible light curable fiber reinforced resin composite according to claim 1 or 2, wherein the cationically polymerizable compound is an epoxy resin, and the epoxy resin is a formulation of 60 wt% to 90 wt% of a solid epoxy resin and 40 wt% to 10 wt% of a liquid epoxy resin.

4. The molding method of the visible light curable fiber reinforced resin composite according to any one of claims 1 to 3, wherein the visible light has a wavelength of 400 nm to 500 nm, an illuminance of 0.1 W/cm² to 10 W/cm², and a light exposure of 0.1 J/cm² to 30 J/cm².
